## Europäisches Patentamt

### European Patent Office

### Office européen des brevets

(11) Numéro de publication: **0 109 871**
**B1**

(12) **FASCICULE DE BREVET EUROPEEN**

(51) Int. Cl.⁴: **G 01 T 1/18**, G 01 T 7/12

(45) Date de publication du fascicule du brevet:
**05.08.87**

(21) Numéro de dépôt: **83402033.1**

(22) Date de dépôt: **19.10.83**

(54) Perfectionnements aux dispositifs de mesure de rayonnements ionisants.

(30) Priorité: **19.10.82 FR 8217498**

(43) Date de publication de la demande:
**30.05.84 Bulletin 84/22**

(45) Mention de la délivrance du brevet:
**05.08.87 Bulletin 87/32**

(84) Etats contractants désignés:
**CH DE GB LI SE**

(56) Documents cités:
HEALTH PHYSICS, vol. 27, no. 1, juillet 1974, pages
97-102, Pergamon Press, IR, K.F. SINCLAIR et al.:
"Subminiature digital ratemeter and dosimeter using
MOS technology"
PROCEEDINGS OF THE SIXTH TRIPARTITE
INSTRUMENTATION CONFERENCE, 22 avril 1959,
partie 2: "Radiation dosimetry and health
instruments", A.E.C.L. 802, J.E. Wooiston & S.J.
Townsend, CA, A.R. JONES: "Warning dosimeter"
HEALTH PHYSICS, vol. 19, no. 5, novembre 1970, pages
692-693, Pergamon Press, IR, W.F. SPLICHAL: "Pocket
radiation dose integrator and monitor"
ELECTRONICS ENGINEERING, vol. 51, no. 625, juillet
1979, page 18, Londres, GB, R.J. HARRIS: "EHT inverter
for Geiger-Muller tubes"

(73) Titulaire: **Lewiner, Jacques, 5, rue Bory d'Arnex,
F-92210 Saint-Cloud (FR)**
Titulaire: **Hennion, Claude, 18, rue Flatters, F-75005 Paris
(FR)**
Titulaire: **Perino, Didier, 10, rue de Bellevue,
F-92150 Suresnes (FR)**

(72) Inventeur: **Lewiner, Jacques, 5, rue Bory d'Arnex,
F-92210 Saint-Cloud (FR)**
Inventeur: **Hennion, Claude, 18, rue Flatters,
F-75005 Paris (FR)**
Inventeur: **Perino, Didier, 10, rue de Bellevue,
F-92150 Suresnes (FR)**

(74) Mandataire: **Behaghel, Pierre et al, CABINET
PLASSERAUD 84 rue d'Amsterdam, F-75009 Paris (FR)**

## Description

L'invention concerne les dispositifs destinés à mesurer les rayonnements ionisants, ou tou au moins à détecter le dépassement par l'intensité de tels rayonnements d'un seuil prédéterminé.

L'invention concerne plus particulièrement, parmi les dispositifs de mesure du genre ci-dessus, ceux qui sont portables et qui utilisent une chambre ou «tube» à ionisation du type Geiger-Muller comme capteur de rayonnements ionisants. De tels tubes, communément appelés tubes GM, nécessitent d'être alimentés sous une haute tension. Comme les circuits connus permettant d'élaborer cette haute tension réclament un courant d'alimentation important, les dispositifs du genre en question connus jusqu'à ce jour présentent l'inconvénient d'être relativement compliqués, donc onéreux, et surtout possèdent une faible autonomie. C'est ainsi que la consommation de ces circuits est typiquement supérieure à quelques milliampères, ce qui ne donne qu'une autonomie de quelques centaines d'heures aux dispositifs alimentés par des piles courantes, et conduirait à des dispositifs très encombrants et lourds, si l'on voulait porter leur autonomie à plusieurs mois, voire à plusieurs années. Or, pour une utilisation accrue de ces appareils dans le domaine du grand public, rendue nécessaire par le développement important des applications de l'énergie nucléaire, de la médecine nucléaire, des techniques de radiothérapie et de contrôle non destructif, une telle autonomie associée à un faible coût devient capitale.

Un tube de Geiger-Muller se présente comme un élément possédant une très grande impédance lorsqu'il n'est pas soumis à une irradiation. En conséquence, il a été proposé pour maintenir aux bornes d'un tel tube une haute tension compatible avec son bon fonctionnement, d'appliquer pendant un bref instant une haute tension à un condensateur relié aux électrodes dudit tube, avec une fréquence de répétition qui ne dépend que des caractéristiques de fuite du condensateur. Un tel dispositif, qui a été par exemple divulgué dans l'article de Harris paru à la page 18 du no 625, vol. 51, de la revue britannique «Electronics Engineering» (juillet 1979), offre une consommation extrêmement réduite par rapport aux montages classiques où la haute tension est produite et appliquée au tube GM en permanence. Cependant, en cas d'irradiation, l'impédance du tube GM décroît fortement, et la tension qui lui est appliquée devient rapidement inférieure à la valeur minimum permettant son bon fonctionnement.

L'invention permet de remédier à cet inconvénient d'une manière particulièrement efficace et économique. De plus, elle utilise de façon particulièrement avantageuse une combinaison de divers éléments connus en soi, tels que ceux décrits dans l'article de Jones aux pages 70–73 du compte rendu canadien de la «Sixième Conférence Tripartite sur l'Instrumentation» du 22 avril 1959 (paper 2–13) AECL 802), de telle sorte que d'une part la haute tension soit produite par un circuit comportant un nombre minimum de composants et nécessitant un courant d'alimentation extrêmement faible et que d'autre part un signal d'alarme soit automatiquement déclenché dès que l'intensité de l'irradiation du tube dépasse un seuil prédéterminé.

A cet effet, les dispositifs de mesure de rayonnement ionisant selon l'invention comprennent un tube de type Geiger-Muller, une source autonome de courant électrique continu, des moyens alimentés par cette source et propres à engendrer des impulsions de haute tension, des moyens redresseurs pour transformer ces impulsions en une haute tension continue servant à alimenter le tube Geiger-Muller, et des moyens associés à ce tube, propres à détecter le dépassement d'un seuil prédéterminé par l'intensité du rayonnement ionisant appliqué audit tube et à déclencher lors d'un tel dépassement un signal d'alarme, et ils sont caractérisés selon l'invention en ce que les moyens pour engendrer les impulsions comprennent d'une part un générateur d'impulsions comportant lui-même un oscillateur indépendant du tube Geiger-Muller, alimenté sous une tension continue $V_1$ relativement basse et constitué par des inverseurs de type CMOS, une porte OU dont une entrée est alimentée par cet oscillateur en premières impulsions émises à une fréquence de répétition faible, et des moyens pour faire agir la sortie du tube Geiger-Muller sur la seconde entrée de ladite porte de façon à y appliquer des impulsions complémentaires dont le nombre est lié à la conduction du tube Geiger-Muller lorsque le seuil ci-dessus est dépassé, et d'autre part un convertisseur alimente sous une tension continue $V_2$ supérieure à $V_1$ et propre à amplifier les impulsions provenant de la porte, les tensions $V_1$ et $V_2$ étant toutes deux élaborées à partir de la source.

Dans des modes de réalisation préférés, on a recours en outre à l'une et/ou à l'autre des dispositions suivantes:

– le signal d'alarme engendré à partir de la sortie du tube Geiger-Muller est formé d'impulsions dont la fréquence varie dans le même sens que l'intensité du rayonnement ionisant et les moyens pour faire agir la sortie du tube sur la seconde entrée de la porte comprennent une liaison électrique entre cette seconde entrée et un point, du circuit d'alarme, où sont présentes lesdites impulsions formant le signal d'alarme, éventuellement par l'intermédiaire d'un changeur de fréquence,

– le circuit amplificateur comprend un transistor MOS dont la tension d'avalanche dépasse 100 V,

– les moyens pour détecter le dépassement d'un seuil prédéterminé d'intensité de rayonnement ionisant comprennent un ou plusieurs circuits du type MOS incorporant des inverseurs possédant un seuil de déclenchement sur le front montant de l'impulsion supérieur au seuil de déclenchement sur le front descendant.

L'invention comprend, mises à part ces dispositions principales, certaines autres dispositions qui s'utilisent de préférence en même temps et dont il sera plus explicitement question ci-après.

Dans ce qui suit, on va décrire quelques modes de réalisation préférés de l'invention en se référant au dessin ci-annexé, d'une manière bien entendu non limitative.

La figure 1, de ce dessin, montre schématiquement un dispositif selon l'invention.

La figure 2 est le schéma d'un détecteur de dépassement du seuil d'irradiation compris par le dispositif ci-dessus.

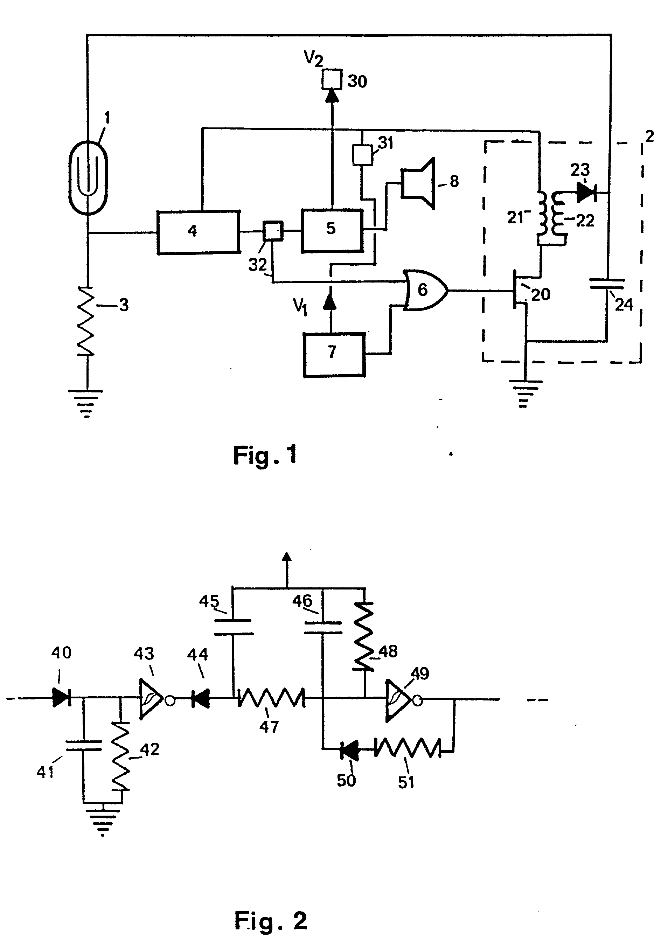

Le dispositif de la figure 1 comprend un tube GM relié d'une part à un circuit convertisseur et redresseur 2 et d'autre part à la masse par l'intermédiaire d'une résistance 3. En présence de rayonnement ionisant, les décharges dans le tube provoquent l'apparition aux bornes de la résistance 3 d'impulsions de tension, qui sont envoyées à un circuit détecteur de seuil 4. Ce circuit 4 a pour fonction d'intégrer ces impulsions et de commander un oscillateur 5 dès que la fréquence d'apparition de ces impulsions dépasse une certaine valeur, qui correspond au franchissement d'un seuil prédéterminé par l'intensité du rayonnement ionisant.

Le circuit 4 est relié d'autre part, à l'aide de moyens 32 comportant notamment un changeur de fréquence, à une porte 6 du type «OU» dont l'autre entrée est reliée à un circuit oscillateur 7 et dont la sortie est reliée au circuit 2.

L'oscillateur 5 alimente un avertisseur sonore 8 qui émet des signaux d'alarme.

En l'absence d'irradiation, seul l'oscillateur 7 fonctionne, et envoie des impulsions au circuit convertisseur et redresseur 2 par l'intermédiaire de la porte 6. Le circuit 2 transforme ces impulsions en une haute tension continue qui alimente le tube GM 1. Il comprend un transistor à effet de champ 20, une bobine de self induction comportant un enroulement primaire 21 et un enroulement secondaire 22, une diode de redressement 23 et un condensateur 24. Les deux enroulements 21 et 22 ont un point commun relié au drain du transistor 20. L'autre extrémité de l'enroulement 21 est reliée à une source de courant électrique 30 délivrant une tension $V_2$, qui alimente également les circuits 4 et 5. Lorsque les impulsions provenant de la porte 6 sont appliquées à la grille du transistor 20, un courant parcourt l'enroulement 21, et lorsque le transistor 20 se bloque, sur le front descendant de l'impulsion, il apparaît aux bornes de l'enroulement 21 une surtension, qui elle-même induit une tension sur l'enroulement 22. Les deux tensions s'ajoutent et chargent le condensateur 24 à une valeur d'autant plus élevée que la surtension produite dans l'enroulement 21 est plus importante, et que le rapport du nombre de spires de l'enroulement 22 sur le nombre de spires de l'enroulement 21 est plus élevé. La surtension produite dans l'enroulement 21 n'étant limitée que par la tension d'avalanche du transistor 20, il est particulièrement avantageux d'utiliser pour celuici un transistor MOS de puissance d'un type supportant une haute tension d'avalanche. De tels transistors, tels que par exemple du type SIPMOS, ou VMOS présentent des tensions d'avalanche de plusieurs centaines de volts.

En l'absence d'irradiation, le tube 1 se comporte comme une résistance quasi infinie, de sorte que le condensateur 24 conserve sa charge pendant un intervalle de temps qui ne dépend que de sa résistance de fuite et de sa capacité. La fréquence des impulsions délivrées par le circuit oscillateur 7 doit donc être calculée de telle sorte que la tension de charge du condensateur 24 reste toujours supérieure à la valeur minimum assurant un bon fonctionnement du tube GM 1.

En présence du rayonnement ionisant, et si le seuil prédéterminé d'intensité de rayonnement est dépassé, le circuit 4 commande l'oscillateur 5 en lui envoyant des impulsions, dont la fréquence dépend de l'intensité de rayonnement. Ces impulsions sont également envoyées au circuit 2 et contribuent à recharger le condensateur 24. En conséquence, lorsque l'intensité du rayonnement ionisant augmente, le rythme de recharge du condensateur 24 augmente également, ce qui permet au tube GM 1 d'être constamment alimenté sous une tension convenable. De ce fait, la consommation de l'ensemble est faible en période de veille, et ajustée en période d'irradiation de façon à maintenir la tension d'alimentation du tube GM à sa valeur optimale.

Pour optimiser cette consommation, on réalise le circuit oscillateur 7 à l'aide d'inverseurs de type CMOS. De tels inverseurs ont une consommation très faible, de l'ordre du microampère, tant que leur tension d'alimentation n'excède pas quatre volts environ. Mais une telle valeur est insuffisante pour ce qui concerne la tension d'alimentation $V_2$ du reste du circuit, notamment le circuit convertisseur et redresseur 2. Dans les dispositifs selon l'invention, ce problème est résolu en alimentant le circuit oscillateur 7 à partir de la source 30 de tension $V_2$, mais par l'intermédiaire de résistances ou, mieux encore, d'une diode Zener 31 placée en série, dont la chute de tension régulée est obtenue pour un courant la traversant de quelques microampères seulement. De telles diodes sont aujourd'hui disponibles, et ainsi, on alimente le circuit 7 sous une tension $V_1$ inférieure à $V_2$, permettant une consommation minimum pour ce circuit.

La figure 2 montre un exemple de réalisation très simple de circuit détecteur de seuil 4. Ce circuit comprend une diode 40, un condensateur 41 et une résistance 42 agencés de manière à élargir les impulsions de tension qui apparaissent aux bornes de la résistance 3, laquelle est reliée à l'anode de la diode 40. Ces impulsions élargies sont appliquées à l'entrée d'un inverseur 43 possédant un seuil de déclenchement sur le front montant de l'impulsion supérieur au seuil de déclenchement sur le front descendant, qui alimente un circuit intégrateur constitué d'une diode 44, de condensateurs 45 et 46 et de résistances 47 et 48, agencés de façon telle que la tension appliquée à l'entrée d'un inverseur 49, du même type que l'inverseur 43, provoque son basculement dès que la fréquence des impulsions dépasse une valeur prédéterminée. Lorsque l'inverseur 49 bascule, le condensateur 46 se vide à travers une diode 50 et une résistance 51, et l'inverseur 49 rebascule à nouveau. Le circuit 4 délivre alors en sortie une impulsion dont la largeur dépend de la capacité du condensateur 46 et de la résistance 51. Le circuit 4 se comporte donc comme un diviseur de fréquence qui ne fonctionne que pour une fréquence supérieure à un seuil déterminé. La valeur de ce seuil dépend de la valeur de la résistance 48 et de la capacité du condensateur 46, tandis que le rapport de division dépend du rapport des valeurs des capacités des condensateurs 45 et 46. La fréquence des impulsions qui apparaissent aux bornes de la résistance 3 étant directement liée à l'intensité du rayonnement ionisant, on peut ajuster le seuil de détection du dispositif en modifiant la valeur des condensateurs 45 et 46 et celle de la résistance 48.

En suite de quoi, et quel que soit le mode de réalisation adopté, on obtient finalement un dispositif de mesure dont la constitution et le fonctionnement résultent suffisamment de ce qui précède.

Ce dispositif présente de nombreux avantages par rapport à ceux antérieurement connus, notamment en ce qui concerne l'autonomie de fonctionnement, qui est très importante. En effet, un dispositif suivant l'invention consomme pour son alimentation typiquement 10 microampères ce qui, conjugué avec l'utilisation d'une pile miniature courante de faible capacité de 90 milliampères-heure, autorise une année de fonctionnement.

De plus, le nombre réduit de composants utilisés pour sa réalisation rend celle-ci très peu coûteuse, et permet une grande diffusion de ces dispositifs.

**Revendications**

1. Dispositif de mesure de rayonnements ionisants, comprenant un tube (1) de type Geiger-Muller, une source autonome (30) de courant électrique continu, des moyens alimentés par cette source et propres à engendrer des impulsions de haute tension (I), des moyens redresseurs (23, 24) pour transformer ces impulsions en une haute tension continue servant à alimenter le tube Geiger-Muller (1), et des moyens associés à ce tube, propres à détecter le dépassement d'un seuil prédéterminé par l'intensité du rayonnement ionisant appliqué audit tube et à déclencher lors d'un tel dépassement un signal d'alarme, caractérisé en ce que les moyens pour engendrer les impulsions (I) comprennent d'une part un générateur (6, 7) d'impulsions (i) comportant lui-même un oscillateur (7) indépendant du tube Geiger-Muller, alimenté sous une tension continue V₁ relativement basse et constitué par des inverseurs de type CMOS, une porte OU (6) dont une entrée est alimentée par cet oscillateur en premières impulsions émises à une fréquence de répétition faible, et des moyens (32) pour faire agir la sortie du tube Geiger-Muller sur la seconde entrée de ladite porte de façon à y appliquer des impulsions complémentaires dont le nombre est lié à la conduction du tube Geiger-Muller lorsque le seuil ci-dessus est dépassé, et d'autre part un convertisseur (20, 21, 22) alimenté sous une tension continue V₂ supérieure à V₁ et propre à amplifier les impulsions (i) provenant de la porte (6), les tensions V₁ et V₂ étant toutes deux élaborées à partir de la source (30).

2. Dispositif selon la revendication 1, caractérisé en ce que le signal d'alarme engendré à partir de la sortie du tube Geiger-Muller (1) est formé d'impulsions (i') dont la fréquence varie dans le même sens que l'intensité du rayonnement ionisant et en ce que les moyens pour faire agir la sortie du tube (1) sur la seconde entrée de la porte (6) comprennent une liaison électrique entre cette seconde entrée et un point, du circuit d'alarme, où sont présentes lesdites impulsions (i') formant le signal d'alarme, éventuellement par l'intermédiaire d'un changeur de fréquence.

3. Dispositif selon l'une quelconque des précédentes revendications, caractérisé en ce que le circuit convertisseur (20, 21, 22) comprend un transistor MOS (20) dont la tension d'avalanche dépasse 100 V.

4. Dispositif selon l'une quelconque des précédentes revendications, caractérisé en ce que les moyens (4) pour détecter le dépassement d'un seuil prédéterminé d'intensité de rayonnement ionisant comprennent un ou plusieurs circuits du type MOS incorporant des inverseurs (43, 49) possédant un seuil de déclenchement sur le front montant de l'impulsion supérieur au seuil de déclenchement sur le front descendant.

**Patentansprüche**

1. Vorrichtung zum Messen von Ionenstrahlungen mit einem Geiger-Müller-Zählrohr (1), einer unabhängigen elektrischen Gleichstromquelle (30), Einrichtungen, die von dieser Quelle versorgt werden und geeignet sind, Hochspannungsimpulse (I) zu erzeugen, Gleichrichtungseinrichtungen (23, 24) zum Umformen dieser Impulse in eine hohe Gleichspannung, die dazu dient, das Geiger-Müller-Zählrohr zu versorgen, und Einrichtungen, die mit diesem Zählrohr verbunden und geeignet sind, wahrzunehmen, dass die Intensität der an dem Zählrohr liegenden Ionenstrahlung einen bestimmten Schwellenwert überschreitet, und ein Alarmsignal bei einem derartigen Überschreiten auszulösen, dadurch gekennzeichnet, dass die Einrichtungen zum Erzeugen der Impulse (I) einerseits einen Generator (6, 7) für Impulse (i), der seinerseits aus einem vom Geiger-Müller-Zählrohr unabhängigen Oszillator (7), der mit einer relativ niedrigen Gleichspannung V₁ versorgt wird, und aus CMOS-Schaltern besteht, einem ODER-Glied (6), dessen einer Eingang vom Oszillator mit ersten Impulsen versorgt wird, die mit einer niedrigen Wiederholungsfrequenz ausgegeben werden, und Einrichtungen (32) aufgebaut ist, die die Ausgangssignale des Geiger-Müller-Zählrohrs derart an den zweiten Eingang dieses logischen Gliedes legen, dass komplementäre Impulse dort anliegen, deren Anzahl in Verbindung mit der Leitfähigkeit des Geiger-Müller-Zählrohrs steht, wenn der genannte Schwellenwert überschritten ist, und andererseits einen Umformer (20, 21, 22) umfassen, der mit einer Gleichspannung $V_2$ versorgt wird, die höher als $V_1$ ist, und der geeignet ist, die Impulse (i) zu verstärken, die am logischen Glied (6) auftreten, wobei die Spannungen $V_1$ und $V_2$ beide von der Quelle (30) geliefert werden.

2. Vorrichtung nach Anspruch 1, dadurch gekennzeichnet, dass das Alarmsignal, das vom Ausgang des Geiger-Müller-Zählrohrs (1) erzeugt wird, aus Impulsen (i') gebildet ist, deren Frequenz sich im selben Sinn wie die Intensität der Ionenstrahlung ändert, und dass die Einrichtungen, die die Ausgangssignale des Zählrohrs (1) an den zweiten Eingang des logischen Gliedes (6) legen, eine elektrische Verbindung zwischen diesem zweiten Eingang und einem Punkt der Alarmschaltung umfassen, an dem die Impulse (i) auftreten, die das Alarmsignal bilden, wobei gegebenenfalls ein Frequenzwandler dazwischen geschaltet ist.

3. Vorrichtung nach einem der vorhergehenden Ansprüche, dadurch gekennzeichnet, dass die Umformerschaltung (20, 21, 22) einen MOS-Transistor (20) mit einer Durchbruchsspannung von über 100 V umfasst.

4. Vorrichtung nach einem der vorhergehenden Ansprüche, dadurch gekennzeichnet, dass die Einrichtungen (4), die ein Überschreiten des bestimmten Schwellenwertes durch die Intensität der Ionenstrahlung wahrnehmen, mehrere MOS-Schaltungen umfassen, die Umschalter (43, 49) bilden, die einen Auslöseschwellenwert an der ansteigenden Flanke der Impulse haben, der über dem Auslöseschwellenwert an der abfallenden Flanke liegt.

## Claims

1. A device for measuring ionizing radiations, comprising a tube (1) of the Geiger-Muller type, an independent source of DC electric current (30), means supplied by this source and adapted to generate high voltage pulses (I), rectifier means (23, 24) for transforming these pulses into a high DC voltage for supplying the Geiger-Muller tube (1), and means associated with this tube adapted to detect when the ionizing radiation intensity applied to said tube overshoots a predetermined threshold and to trigger off an alarm signal when such an overshoot occurs, characterized in that the means for generating the pulses (I) comprise, on the one hand, a generator (6, 7) of pulses (i) comprising itself an oscillator (7) independent of the Geiger-Muller tube, supplied with a relatively low DC voltage $V_1$ and formed by inverters of the CMOS type, an OR gate (6) one of whose inputs is supplied by this oscillator with first pulses having a low repetition frequency, and means (32) for causing the output of the Geiger-Muller tube to act on the second input of said gate (6) so as to apply thereon complementary pulses, the number of which is bound to the conduction of the Geiger-Muller tube when the above mentioned threshold is exceeded, and on the other hand, a converter (20, 21, 22) supplied at a DC voltage $V_2$ greater than $V_1$ and adapted to amplify the pulses (i) coming from the gate (6), the voltages $V_1$ and $V_2$ being both elaborated from the source (30).

2. The device according to claim 1, characterized in that the alarm signal generated from the output of the Geiger-Muller tube (1) is formed of pulses (i') whose frequency varies in the same direction as the intensity of the ionizing radiation and in that the means for causing the output of the tube (1) to act on the second input of the gate (6) comprise an electrical connection between this second input and a point, in the alarm circuit, where said pulses (i') forming the alarm signal are present, possibly through a frequency changer.

3. The device according to any one of the preceding claims, characterized in that the converter circuit (20, 21, 22) comprises an MOS transistor (20) whose avalanche voltage exceeds 100V.

4. The device according to any one of the preceding claims, characterized in that the means (4) for detecting when a predetermined threshold is exceeded by the ionizing radiation intensity comprise one or more circuits of the MOS type incorporating inverters (43, 49) having a threshold triggering on the rising edge of the pulse greater than the threshold triggering on the falling edge.

**Fig . 1**

**Fig . 2**